# EUROPÄISCHE PATENTSCHRIFT

(11) **EP 2 210 524 B1**
(45) Veröffentlichungstag und Bekanntmachung des Hinweises auf die Patenterteilung: **28.09.2011**
(21) Anmeldenummer: 09151374.7
(22) Anmeldetag: 27.01.2009
(51) Int. Cl.: A47B 87/00, A47B 81/00, A47B 47/02

(54) **Blockregal zur Lagerung von Sätzen von Fahrzeugrädern**
Block shelf for storing vehicle wheel sets
Etagère en bloc destinée au stockage d'ensembles de roues de véhicules

(43) Veröffentlichungstag der Anmeldung: 28.07.2010
(73) Patentinhaber: Irega AG, 4528 Zuchwil (CH)
(72) Erfinder: Scholz, Gottfried, 65207 Hofheim-Langenhain (DE)
(74) Vertreter: Aue, Hans-Peter

(56) Entgegenhaltungen:
- CA-A1- 2 532 695
- DE-U1- 20 006 047
- DE-U1-202007 003 624
- FR-A- 1 194 315
- US-A- 3 199 471
- US-A- 3 396 840

## Beschreibung

Die Erfindung bezieht sich auf ein Blockregal zur Lagerung von Sätzen von Fahrzeugrädern, die aufrecht und sich jeweils an den Laufflächen gegenüber stehend hintereinander im Blockregal gelagert sind, mit mehreren an ihren Längsseiten zueinander beabstandeten Regalen mit jeweils einer Mehrzahl von vertikalen Längspfosten, die durch mehrere Traversen an den Regalstirnseiten und Querstreben an den Regallängsseiten verbunden sind und somit Fächer bilden, wobei die zueinander beabstandeten Regale durch weitere Traversen verbunden sind und in den Fächern der Regale Abrollelemente für die Fahrzeugräder angeordnet sind.

Es sind eine Vielzahl von Regalen bzw. Regalsystemen bekannt, deren Einzelteile, wie Längspfosten, Seitenleitern bzw. Traversen und Auflageboards durch unterschiedliche Befestigungsarten, z.B. durch Schweißen oder Verschrauben, miteinander verbunden sind. Solche Regale weisen in der Regel mehrere Längspfosten an den Regaleckpunkten auf, an denen in bestimmten vertikalen Abständen ein oder mehrere waagerechte Auflageboards befestigt sind, auf denen Gegenstände gelagert werden.

Nachteilig bei solchen Regalen bzw. Regalsystemen ist, dass diese in Abhängigkeit von der Verbindungsart nicht mehr zerlegt oder den Bedürfnissen des Benutzers angepasst werden können. Dadurch weisen diese Regale bzw. Regalsysteme zwar eine hohe Stabilität auf, jedoch ist eine Variation der Größe und Anzahl der Auflageboards im Regal bzw. Regalsystem stark begrenzt. Weiterhin sind diese Regale bzw. Regalsysteme auch auf Grund ihres durch die feste Verbindung benötigten Platzvolumens nur schwer transportierbar.

Darüber hinaus sind eine Vielzahl von Stecksystemen für Regale bekannt, bei denen die Regalteile, wie Auflageboards, Längspfosten, Traversen usw. zum Beispiel durch Nut-Feder-Verbindungen verbunden werden. Bei manchen Systemen werden die Auflageboards einfach auf Stege oder Stifte an den Traversen aufgelegt. Dies führt aber zu einer hohen Instabilität des Regalsystems. Verschraubte oder durch spezielle Verbindungselemente verbundene Regale bzw. Regalsysteme sind nur mit großem Aufwand montierbar oder demontierbar, so dass die damit befassten Personen Auf- bzw. Abbauprobleme haben. Des Weiteren sind oft kompliziert gestaltete Verbindungselemente zum Verbinden des Auflageboards erforderlich, die fertigungstechnisch schwierig herzustellen sind.

Aus der WO 03/028506 A1 ist ein Regalsystem zur Lagerung und Archivierung von Gegenständen bekannt, im Wesentlichen bestehend aus mindestens einem Regal mit rechteckigem Querschnitt, an dessen Eckpunkten vertikale Längspfosten angeordnet sind, wobei zwischen jeweils zwei stirnseitigen Längspfosten horizontale Traversen zur Befestigung von mit je einer abwärts gerichteten Stirnseitenlasche versehene Auflageboards anbringbar sind und die Längspfosten Aussparungen zur Aufnahme von vertikal und horizontal beabstandeten und abwärts gerichteten Paaren von Haken an den Traversen aufweisen. Die abwärts gerichtete Stirnseitenlasche des Auflageboards ist festgepresst zwischen der Traverse und den diese tragenden Längspfosten des Regals verklemmbar.

Problematisch ist die Lagerung von Rädern von Fahrzeugen, aber auch von Felgen und Reifen, in solchen Regalen bzw. Regalsystemen. Die Lagerung erfolgt in der Regel in einer solchen Weise, dass die Räder entweder flach liegend, oftmals mehrere Räder übereinander, oder aufrecht stehend auf der Lauffläche der Räder nebeneinander im Regal platziert werden. Dabei berühren die Räder die längsseitigen vorderen und hinteren Querstreben des Regals. Hierdurch wird viel Platz zur Lagerung der Räder benötigt. Darüber hinaus können Sätze von zusammen gehörenden Rädern eines Fahrzeuges nur nebeneinander gelagert werden, um die Übersicht der verschiedenen Rädersätze und die Zugehörigkeit der Räder zu einem bestimmten Rädersatz zu gewährleisten.

Aus der DE 20 2007 003 624 U1 ist ein Blockregal zur Lagerung insbesondere von Fahrzeugrädern bekannt, mit zwei an ihren Längsseiten zueinander beabstandeten Regalen mit rechteckigem Grundriss und mehreren Fächern, wobei an den Eckpunkten jedes Regals vertikale Längspfosten angeordnet sind, die mittels Traversen an den Längspfosten und den Stirnseiten des Regals miteinander verbunden sind. Die zwei an ihren Längsseiten zueinander beabstandeten Regale sind an ihren sich gegenüberstehenden Eckpunkten stirnseitig durch weitere Traversen verbunden. Im Abstand zwischen den zwei Regalen sind Abrollelemente für die Räder angeordnet.

Dieses Blockregal ist für die Hintereinanderreihung von nur jeweils zwei aufrecht stehenden Fahrzeugrädern vorgesehen. Dadurch kann kein Satz von vier Fahrzeugrädern in übersichtlicher Weise gelagert werden, so dass es zu Verwechslungen, d.h. falschen Zuordnungen der Räder zu einem bestimmten Fahrzeug oder Fahrzeugbesitzer, kommen kann. Insofern ist es notwendig, Paare von Fahrzeugrädern nebeneinander zu lagern, wodurch ein erhöhter Lagerplatzbedarf besteht. Darüber hinaus gibt es keinerlei Sicherungsmöglichkeit, die Fahrzeugräder gegen Umfallen zu sichern. Lagern die Fahrzeugräderpaare jedoch jeweils in Hintereinanderreihung ist ein Umfallen eines oder mehrerer Räder unausweichlich.
Weiterhin ist aus der US 3,396,840 ein Lagerregal bekannt, bei dem Regalböden an den Längspfosten befestigt werden. In die Fächer sind flache Bleche mit einem geneigten vorderen und hinteren Abschnitt mit Schlitzen eingebaut. In die Schlitze sind Begrenzungsteile an ihren Eckbereichen eingesetzt. Die Begrenzungsteile sollen Ton- oder Datenbänder vor dem Umfallen schützen.
Es ist Aufgabe der Erfindung, ein Blockregal der eingangs genannten Art zur Lagerung von Sätzen von Fahrzeugrädern zu schaffen, mit dem platzsparend und komfortabel komplette Fahrzeugrädersätze gelagert und gehandhabt werden können, wobei ein Umfallen von gelagerten Rädern im Blockregal verhindert werden soll.
Erfindungsgemäß wird die Aufgabe dadurch gelöst, dass die Abrollelemente gegebenenfalls als vom vorderen Regal zum hinteren Regal ansteigend verlaufende Laufflächen ausgebildet sind, und dass in Abhängigkeit von der jeweiligen Breite der Fahrzeugräder eine Mehrzahl von seitlichen Räderhaltern als Umfallschutz an den Querstreben der Regale angebracht sind, welche jeweils einen Satz hintereinander angeordneter, aufrecht stehender Fahrzeugräder begrenzen und gegen Umfallen sichern, wobei die Räderhalter vereinzelt oder durchgängig sowie vertikal oder horizontal in die gelochten Querstreben oder andere Seitenführungen der Regale eingesetzt sind, und dass die Fahrzeugräder vorzugsweise mit Hilfe eines geeigneten Greifinstrumentes über die Abrollelemente der Regale nach vorn in das vordere Regal gerollt und aus diesem entnehmbar sind.
Es wird klargestellt, dass unter den Begriff "Fahrzeugräder" im Sinne der Erfindung auch Reifen und Felgen von Fahrzeugen verstanden werden, die ebenfalls im erfindungsgemäßen Blockregal gelagert werden können.
Somit sind vier Regale an ihren Längsseiten beabstandet, also parallel zueinander angeordnet und bilden einen Abstand zueinander, der durch die weiteren waagerechten Traversen überbrückt wird, welche jeweils zwei benachbarte Regale miteinander verbinden. Durch diesen Abstand entsteht zwischen den Regalpaaren gewissermaßen jeweils ein weiteres Zwischenregal. Da im Abstand zwischen den Regalpaaren Abrollelemente für die Räder vorgesehen sind, bilden die Regalpaare und die Zwischenregale ein Blockregal, in dem vollständige Sätze von Fahrzeugrädern im Blockregal gelagert werden können. Dabei werden die Fahrzeugräder jeweils eines Satzes aufrecht stehend und sich jeweils an den Laufflächen gegenüber stehend, hintereinander im Blockregal gelagert. So kann ein erster aus vier Fahrzeugrädern bestehender Radsatz, ein zweiter Satz von Fahrzeugrädern neben dem ersten, ein dritter Satz von Fahrzeugrädern neben dem zweiten usw. nebeneinander und aufrecht stehend gelagert werden.
Es ist darauf hinzuweisen, dass darüber hinaus auch Räder, Felgen und Reifen unterschiedlicher Größe in dem Blockregal gelagert werden können.
Um die Fahrzeugräder eines Satzes aus dem Blockregal entnehmen zu können, wird erst das vordere der vier Fahrzeugräder aus dem vorderen Regal entnommen. Um das zweite Rad des Radsatzes aus dem hinter dem ersten Regal befindlichen Regal entnehmen zu können, wird dieses vorzugsweise mit Hilfe eines geeigneten Greifinstrumentes einfach über die Abrollelemente des Zwischenregals nach vorn in das vordere Regal gerollt und kann aus diesem vorderen Regal entnommen werden. In gleicher Weise werden das dritte und vierte Fahrzeugrad aus dem Blockregal entnommen. Das Greifinstrument kann ein rechenartiges Werkzeug, ein um die Fahrzeugräder umlegbares Zugband oder dergleichen sein.
Zum Einlagern der Räder eines Radsatzes werden diese in umgekehrter Reihenfolge in dem vorderen, zweiten, dritten und hinteren Regal und Zwischenregal platziert.
Durch die weiteren, die vier Regale verbindenden Traversen erhält das Blockregal eine hohe Stabilität. Darüber hinaus ist ein einfaches und komfortables Einstellen und Entnehmen der Räder eines Radsatzes in das und aus dem Blockregal gewährleistet. Des Weiteren ist für das Lagerpersonal stets die Zusammengehörigkeit eines Radsatzes durch die Anordnung der Fahrzeugräder hintereinander klar erkennbar.
Das Blockregal wird durch eine Mehrzahl von horizontal und vertikal ausgebildeten Fächern gebildet, die durch die horizontalen Querstreben und Traversen gebildet werden. Selbstverständlich können viele solcher Fächer in mehreren Etagen übereinander und in Lagen nebeneinander im Blockregal vorgesehen werden, um so die Lagerkapazität für Fahrzeugräder erheblich zu vergrößern. Die Größe der Fächer der Regale wird vorzugsweise in Abhängigkeit von den Abmessungen der Fahrzeugräder, wie Reifenbreite und Raddurchmesser, dimensioniert.
Des Weiteren kann die Lagerkapazität für Fahrzeugräder auch noch dadurch erhöht werden, dass beispielsweise zwei solcher Blockregale mit ihrer jeweiligen Rückseite aneinander aufgestellt werden. Die beiden Entnahmeseiten der Blockregale sind dabei voneinander abgewandt und sind dabei zu einem freien, davor befindlichen Platz oder Gang ausgerichtet. Dadurch wird erheblich Lagerplatz eingespart.
Da die Abrollelemente gegebenenfalls als vom vorderen Regal zum hinteren Regal ansteigend verlaufende Laufflächen ausgebildet sein können, hat dies den besonderen Vorteil, dass die hinten in den hinteren Regalen des Blockregal gelagerten Fahrzeugräder durch ihr Eigengewicht und die Schwerkraft das Bestreben haben nach vorn in das vordere oder die zuvor angeordneten Regale zu rollen. Dadurch können die schweren Fahrzeugräder leichter aus dem vorderen Regal entnommen werden.
Die Räderhalter verhindern ein Umkippen und seitliches Wegrollen der Fahrzeugräder beim Bewegen auf den Abrollelementen. Somit dienen die Räderhalter als Umfallschutz für die aufrecht stehenden Fahrzeugräder während des Lagerns und auch beim Einstellen und Entnehmen der Räder. Gleichzeitig wird durch die Räderhalter ein Satz von Fahrzeugrädern vom daneben gelagerten Rädersatz getrennt. Dem entsprechend sind die Räderhalter in ausreichender Anzahl und Abständen an den gelochten Querstreben der Regale platziert. Gegebenenfalls können die Räderhalter entfallen, wenn die Abrollelemente im Querschnitt schalenförmig oder V-förmig ausgeführt sind.
Gemäß einer weiteren Ausbildung des Blockregals sind die Abrollelemente als waagerecht verlaufende Laufflächen ausgebildet. Gegebenenfalls können hierbei die Abrollelemente derart zwischen den Regalen angeordnet sein, dass die Flächen der Abrollelemente geringfügig oberhalb oder unterhalb der unteren Lauffläche der in den Regalen lagernden Fahrzeugräder fluchten. Dadurch wird das Einstellen und Entnehmen der Fahrzeugräder eines Radsatzes in das und aus dem Blockregal vereinfacht, da die Fahrzeugräder beim Einstellen und Entnehmen in das und aus dem Blockregal einen gewissen Widerstand durch die geringfügigen Höhenunterschiede zwischen den Laufflächen der Fahrzeugräder in benachbarten Regalen und dem jeweils dazwischen liegenden Abrollelement überwinden und somit nicht unkontrolliert nach vorn oder hinten abrollen können. Weiterhin können die Abrollelemente im Querschnitt eben, schalenförmig oder V-förmig ausgebildet sein und aus Blechen, Profilen, Gitterböden oder aus einer Mehrzahl von Rollen bestehen. Ein Fahrzeugrad mit einer Felge neigt in der Regel dazu, beim Entlangrollen auf dem Abrollelement nach einer Seite abzukippen bzw. seitlich wegzurollen, da die Felge durch ihre im Querschnitt unsymmetrische Ausbildung an einer Seite schwerer ist als an der anderen Seite. Werden die Fahrzeugräder aufrecht stehend gelagert, verhindern im Querschnitt schalenförmige oder V-förmige Abrollelemente dieses Abkippen oder seitliche Wegrollen.
Bei einer vorteilhaften Ausgestaltung weisen die vertikalen Längspfosten der Regale eine Vielzahl von Schlitzen und/oder Ausnehmungen auf, in welche die Traversen jedes Regals und die die Regale verbindenden weiteren Traversen einsetzbar sind. Des Weiteren weisen die Traversen vorzugsweise eine Mehrzahl von Haken auf, die in die Schlitze und/oder Ausnehmungen der vertikalen Längspfosten eingreifen.
Nach einer Ausbildung sind die Querstreben rasterartig gelocht ausgebildet und dienen zur Aufnahme der Räderhalter. Die Räderhalter können als Seile, Spanndrähte, Längsstäbe, Laschen, Platten, Scheiben, Schienen oder dergleichen ausgebildet und in die gelochten Querstreben der Regale eingebracht sein. Es liegt im Ermessen des Fachmannes ähnliche oder äquivalente Räderhalter zu verwenden

Der der Erfindung zugrunde liegende Gedanke wird in der nachfolgenden Beschreibung anhand von Ausführungsbeispielen, die in den Zeichnungen dargestellt sind, näher beschrieben. Es zeigen:

Fig. 1 eine Perspektivansicht eines Blockregals ohne Fahrzeugräder in einer ersten Ausführungsform,

Fig. 2 eine Teilseitenansicht des Blockregals in Richtung der Pfeile A-A gemäß Fig. 1 mit einem Satz von zu lagernden Fahrzeugrädern,

Fig. 3 eine Perspektivansicht eines Teils des Blockregals in Richtung der Pfeile B-B gemäß Fig. 1,

Fig. 4 eine Teilvorderansicht eines Längspfostens des Blockregals gemäß Fig. 1,

Fig. 5 eine Seitenansicht des Längspfostens gemäß Fig. 4,

Fig. 6 eine Rückansicht des Längspfostens gemäß Fig. 4,

Fig. 7 eine Querschnittsansicht gemäß der Linie C-C des Längspfostens nach Fig. 4,

Fig. 8 eine Vorderansicht einer Traverse,

Fig. 9 eine perspektivische Seitenansicht eines im Querschnitt ebenen Abrollelementes.

Fig. 10 eine Perspektivansicht eines Blockregals ohne Fahrzeugräder in einer zweiten Ausführungsform,

Fig. 11 eine vergrößerte perspektivische Teilansicht des Blockregals nach Fig. 10, und

Fig. 12 eine Teilseitenansicht des Blockregals in Richtung der Pfeile B-B gemäß Fig. 11 mit einem Satz von zu lagernden Fahrzeugrädern.

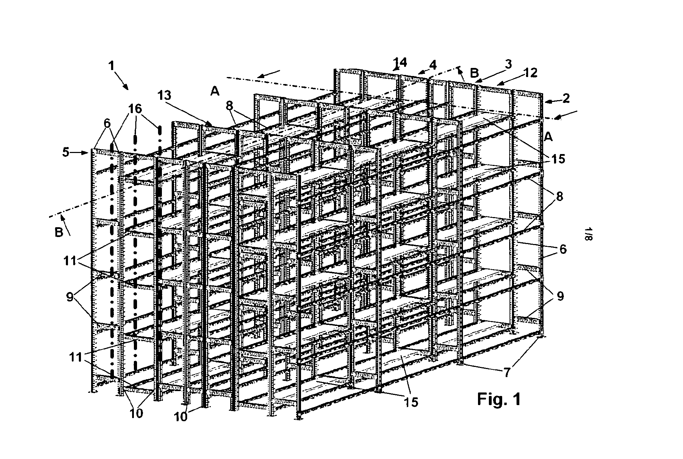

Fig. 1 zeigt ein Blockregal 1, welches zunächst aus vier an ihren Längsseiten zueinander beabstandeten Regalen 2, 3, 4 und 5 besteht. Das Blockregal 1 weist einen rechteckigen Grundriss auf und besteht vorzugsweise vollständig aus einem metallischen Blechmaterial. An jedem der Eckpunkte des Blockregals 1 befindet sich ein vertikaler Längspfosten 6 mit einem Fuß 7 an dessen unterem Ende. Die Längspfosten 6 sind durch mehrere zueinander beabstandete waagerechte, vordere und hintere Querstreben 8 miteinander verbunden, so dass die Regale 2 bis 5 und somit das Blockregal 1 eine Längsstabilität besitzen. Stirnseitig sind die Regale 2 bis 5 jeweils durch Traversen 9, also waagerechten Querträgern, miteinander verbunden.

Bei dieser Ausführung des Blockregals 1 sind an den innen liegenden Längspfosten 6 jeweils ein weiterer Längspfosten 10 angeordnet, wobei diese miteinander verschraubt sind. Gegebenenfalls können diese Längspfosten 10 entfallen.

Im Abstand zwischen den Regalen 2 bis 5 sind weitere Traversen 11 vorgesehen, die in die jeweils benachbarten Längspfosten 6 oder 10 der Regale 2 bis 5 eingreifen und zwar in der Art, wie dies durch die Traversen 7 erfolgt. Dabei wird gewissermaßen jeweils ein Zwischenregal 12,13,14 gebildet.

Von der Längsseite des vorderen Regals 2 aus gesehen, folgt also ein erstes Zwischenregal 12, dann das zweite Regal 3, dann ein zweites Zwischenregal 13, dann das dritte Regal 4, dann ein drittes Zwischenregal 14 und schließlich das vierte Regal 5. In die Traversen 11 sind waagerechte Abrollelemente 15 mit ebenem Querschnitt eingesetzt.

Wie aus den Fig. 1 bis 3 ersichtlich ist, sind bei diesem Ausführungsbeispiel eine Vielzahl von Räderhaltern 16 als Umfallschutz an den waagerechten, rasterartig gelochten Querstreben 8 der Regale 2 bis 5 bzw. Zwischenregale 12 bis 14 angebracht, die beispielhaft als einteilige, vertikal durchgehende Längsstäbe aus einem metallischen oder Kunststoffmaterial ausgebildet sind.

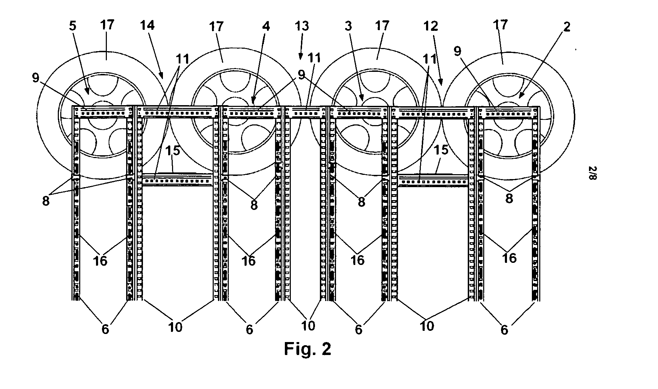

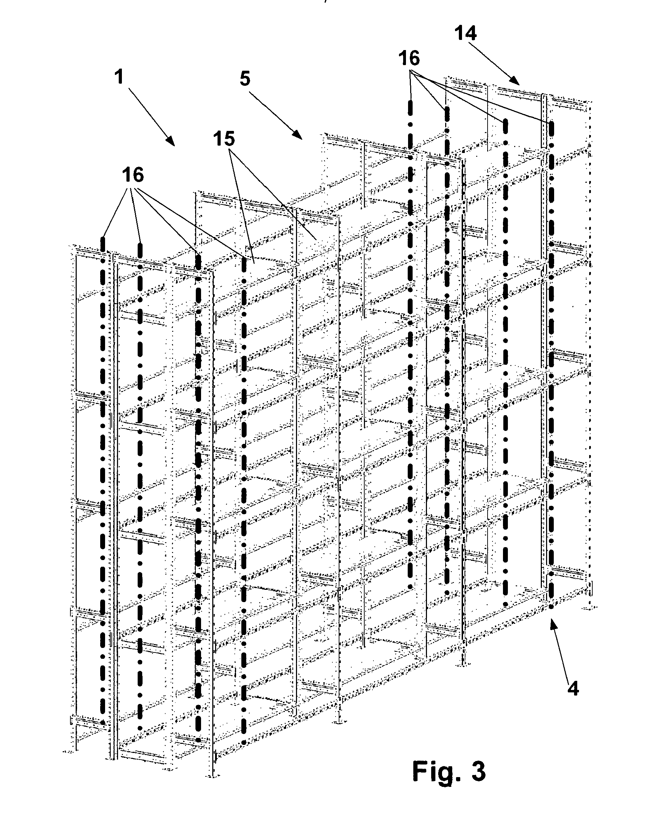

In Fig. 1 sind der besseren Übersicht wegen nur drei der Räderhalter 16 dargestellt, die an der hinteren Längsseite des Regals 5 in den rasterartig gelochten Querstreben 8 eingesetzt sind. In Fig. 2 sind die Räderhalter 16 quer zur Längsrichtung des Blockregals 1 dargestellt. Fig. 3 zeigt die Räderhalter 16 ebenfalls quer zur Längsrichtung des Blockregals 1, wobei diese jeweils einen Satz hintereinander angeordneter, aufrecht stehender Fahrzeugräder 17 begrenzen und gegen Umfallen sichern. Auch in Fig. 3 sind der besseren Übersicht wegen nur zwei Sätze von jeweils vier Räderhaltern 16 dargestellt.

Werden also die Sätze von Fahrzeugrädern 17 nicht durch die Längspfosten 6 und 10 sowie die zugehörigen Traversen 9 und 11 voneinander getrennt, erfolgt diese Trennung durch eine Vielzahl entsprechender Räderhalter 16.

Wie aus Fig. 2 zu ersehen ist, sind jeweils ein Satz von vier Fahrzeugrädern 17 aufrecht stehend und sich jeweils an den Laufflächen gegenüber stehend, hintereinander im Blockregal 1 in den Regalen 2 bis 5 platziert, wobei diese jeweils in das angrenzende Zwischenregal 12 bis 14 hineinreichen. Die Fahrzeugräder 17 liegen dabei auf den waagerechten Querstreben 8 der Regale 2 bis 5 auf.

Wenn die Fahrzeugräder 17 eines zusammengehörigen Satzes aus dem Blockregal 1 entnommen werden sollen, wird das vordere Fahrzeugrad 17 aus dem vorderen Regal 2 entnommen. Um das zweite Fahrzeugrad 17 des Radsatzes aus dem Regal 3 entnehmen zu können, wird dieses, beispielsweise mit Hilfe eines nicht näher gezeigten Greifwerkzeuges, über das Abrollelement 15 des Zwischenregals 12 nach vorn in das vordere Regal 2 gerollt und kann aus diesem entnommen werden. In gleicher Weise werden das dritte und vierte Fahrzeugrad 17 aus den Regalen 4 und 5 über die Zwischenregale 12 bis 14 und die Regale 3 bzw. 4 nach vorn in das Regal 2 gerollt und entnommen.

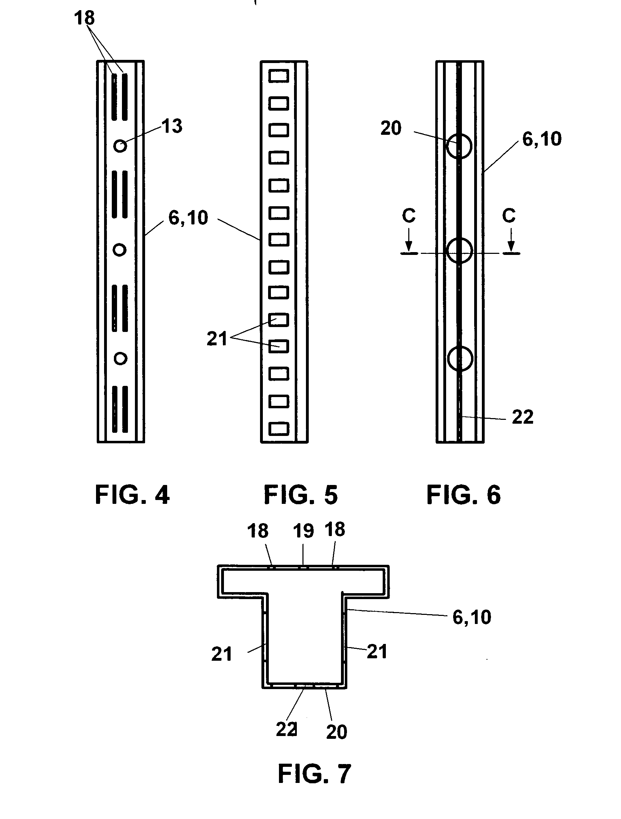

Die Fig. 4 bis 7 zeigen eine vergrößerte Ansicht eines Teilbereiches eines Längspfostens 6 bzw. 10. Dieser weist auf seiner Vorderseite gemäß Fig. 4 zueinander beabstandete Paare von Ausnehmungen auf, die als Schlitze 18 ausgebildet sind. In die Schlitze 18 können nicht dargestellte Einhängeteile eingebracht werden, beispielsweise Verkleidungsbleche oder spezielle Halterungen für bestimmte Lagergegenstände usw.. Weiterhin sind zueinander beabstandete Lochungen 19 vorgesehen. An der Rückseite des Längspfostens 6 bzw. 10 gemäß Fig. 6 sind weitere Bohrungen 20 vorgesehen, die zu den Lochungen 19 an der Vorderseite des Längspfostens 6 bzw. 10 fluchten. Diese Lochungen 19 und Bohrungen 20 können zur Schraubbefestigung von beliebigen Teilen und/oder zur Befestigung des Längspfostens 6 bzw. 10 an einer Wand vorgesehen werden.

Des weiteren weist der Längspfosten 6 bzw. 10 an seinen Seitenwänden eine Vielzahl zueinander beabstandeter Ausnehmungen 21 auf, die im Wesentlichen dafür vorgesehen, das Gewicht des Längspfostens 6 bzw. 10 durch Materialreduzierung zu verringern sowie die Traversen 9 und 11 aufzunehmen. Die Schlitze 18, die Lochungen 19, die Bohrungen 20 und die Ausnehmungen 21 sind rasterartig am Längspfosten 6 bzw. 10 ausgebildet und angeordnet.

Ferner ist, wie aus den Fig. 6 und 7 ersichtlich ist, der Längspfosten 6 bzw. 10 als aus einem Flachbandmaterial gewalztes Hohlprofil ausgebildet, so dass der fertige Längspfosten 6 bzw. 10 an seiner Rückseite einen Spalt 22 bildet. Der Längspfosten 6 bzw. 10 weist somit im Querschnitt gemäß Fig. 7 eine im Wesentlichen T-Form auf.

Die rasterartig gelochten Querstreben 8 des Blockregals 1 sind in diesem Ausführungsbeispiel in identischer Weise ausgebildet wie die Längspfosten 6 bzw. 10, so dass die Ausnehmungen 15 zur Befestigung bzw. Hindurchführung der Räderhalter 16 dienen.

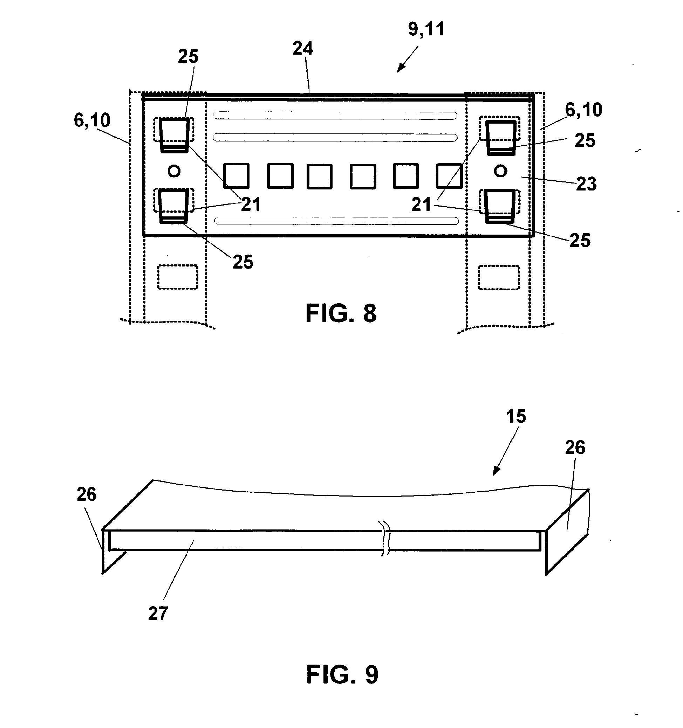

Fig. 8 zeigt eine beispielhafte Traverse 9 oder 11 für das Blockregal 1 bzw. die Regale 2 bis 5, wobei die Traverse 9 oder 11 stirnseitig zwischen zwei beabstandete Längspfosten 6 bzw. 10 eingesetzt ist. Die Traverse 9 bzw. 11 besitzt ein Grundbauteil 23 mit einer oberen waagerechten Auflagekante 24, auf der im eingesetzten Zustand des Abrollelemente 15 dessen Unterseite aufliegt.

An den Randabschnitten der Traverse 9 bzw. 11 ist jeweils ein Paar von horizontal und vertikal zueinander beabstandeten und abwärts gerichteten Haken 25 ausgeformt. Die Haken 25 greifen in die Ausnehmungen 21 der Längspfosten 6 bzw. 10 des Blockregals 1 bzw. der Regale 2 bis 5 und Zwischenregale 12 bis 14 ein. Dadurch wird die jeweilige Stirnseitenlasche 26 des Abrollelementes 15 zwischen der Traverse 9 bzw. 11 und den Längspfosten 6 bzw. 10 sicher verklemmt.

Fig. 9 zeigt eine perspektivische Seitenansicht des Abrollelementes 15. An jeder dessen Längsseiten ist eine nach unten ragende Längsseitenwand 26 angelenkt, um das Abrollelemente zu versteifen.

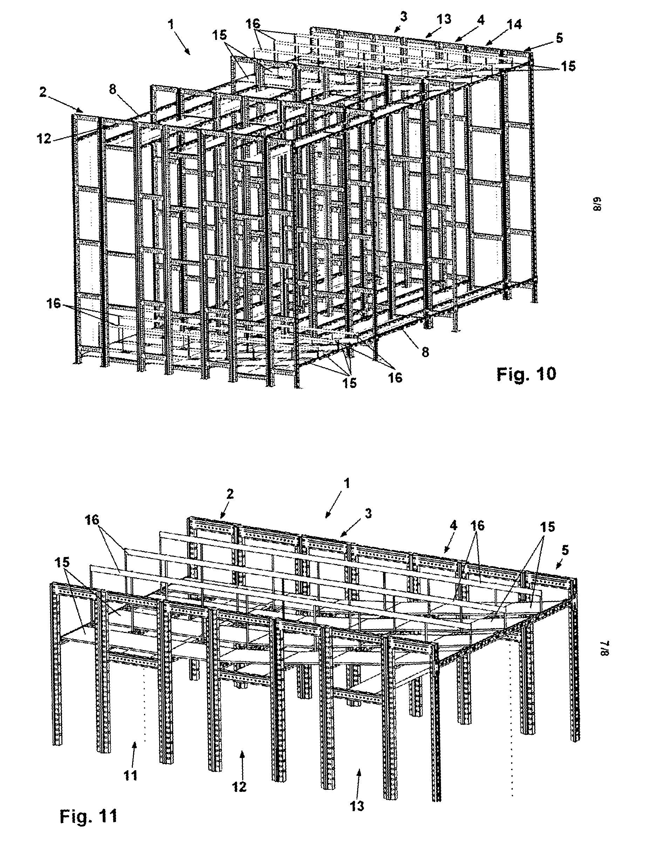

In den Fig. 10 bis 12 ist das Blockregal 1 in einer anderen Ausführungsform dargestellt. Für gleiche Teile der zuvor beschriebenen werden für diese Ausführungsform die gleichen Bezugszeichen verwendet. Der besseren Übersicht wegen, werden einige Bezugszeichen weggelassen, die denen der ersten Ausführungsform identisch sind.

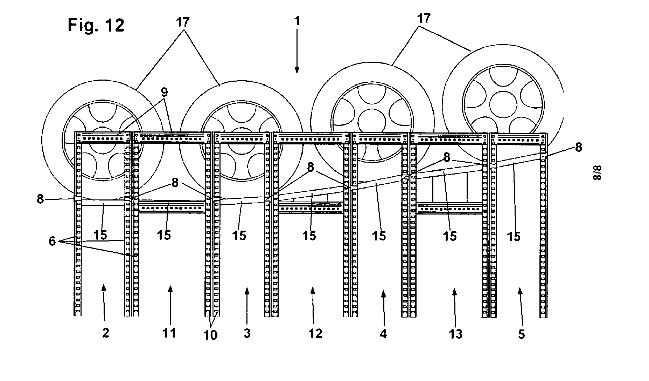

Bei diesem Blockregal 1 sind die Abrollelemente 15 mit vom vorderen Regal 2 bis zum hinteren Regal 5 ansteigend verlaufenden Laufflächen ausgebildet und ausgerichtet, wobei in Fig. 10 nur ein Teil des Blockregal 1 mit Abrollelementen 15 dargestellt ist. Durch die Neigung der Abrollelemente 15 können Sätze von Fahrzeugrädern 17 in ansteigender Weise, wie in Fig. 12 an einem Satz von Fahrzeugräder 17 gezeigt, im Blockregal 1 gelagert werden.

Als Umfallschutz werden Räderhalter 16 verwendet, die als an den Abrollelementen 15 oder an den waagerechten Querstreben 8 befestigte Schienen ausgebildet sind und die Sätze von Fahrzeugrädern 17 innerhalb eines Faches des Blockregals 1 voneinander trennen und darüber hinaus die Fahrzeugräder 17 beim Entnehmen und Einsetzen aus und in das Blockregal 1 entlang der Abrollelemente 15 sicher führen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Beispielsweise können im Querschnitt V-förmig oder eben ausgebildete Abrollelemente mit und ohne Anstieg vom vorderen zum hinteren Regal mit oder ohne Räderhalter als Umfallschutz, Blockregale mit oder ohne Zwischenregale, unterschiedliche Fachhöhen und -breiten in einem Blockregal usw. verwendet werden.

Liste der Bezugszeichen

**Tabelle 1**

| | |
|---|---|
| 1 | Blockregal |
| 2 | Regal |
| 3 | Regal |
| 4 | Regal |
| 5 | Regal |
| 6 | Längspfosten |
| 7 | Fuß |
| 8 | Querstrebe |
| 9 | Traverse |
| 10 | Längspfosten |
| 11 | Traverse |
| 12 | Zwischenregal |
| 13 | Zwischenregal |
| 14 | Zwischenregal |
| 15 | Abrollelement |
| 16 | Räderhalter |
| 17 | Fahrzeugräder |
| 18 | Schlitz |
| 19 | Lochung |
| 20 | Bohrung |
| 21 | Ausnehmung |
| 22 | Spalt |
| 23 | Grundbauteil |
| 24 | Auflagekante |
| 25 | Haken |
| 26 | Stirnseitenlasche |
| 27 | Längsseitenwand |

## Patentansprüche

1. Blockregal (1) zur Lagerung von Sätzen von Fahrzeugrädern (17), die aufrecht und sich jeweils an den Laufflächen gegenüber stehend hintereinander im Blockregal (1) gelagert sind, mit mehreren an ihren Längsseiten zueinander beabstandeten Regalen (2-5) mit jeweils einer Mehrzahl von vertikalen Längspfosten (6), die durch mehrere Traversen (9) an den Regalstirnseiten und Querstreben (8) an den Regallängsseiten verbunden sind und somit Fächer bilden, wobei die zueinander beabstandeten Regale (2-5) durch weitere Traversen (11) verbunden sind und in den Fächern der Regale (2-5) Abrollelemente (15) für die Fahrzeugräder (17) angeordnet sind, **dadurch gekennzeichnet, dass** die Abrollelemente (15) als vom vorderen Regal (2) zum hinteren Regal (5) gegebenenfalls ansteigend, verlaufende Laufflächen ausgebildet sind, und dass in Abhängigkeit von der jeweiligen Breite der Fahrzeugräder (17) eine Mehrzahl von seitlichen Räderhaltern (16) als Umfallschutz an den Querstreben (8) der Regale angebracht sind, welche jeweils einen Satz hintereinander angeordneter, aufrecht stehender Fahrzeugräder (17) begrenzen und gegen Umfallen sichern, wobei die Räderhalter (16) vereinzelt oder durchgängig sowie vertikal oder horizontal in die gelochten Querstreben (8) oder andere Seitenführungen der Regale (2-5) eingesetzt sind, und dass die Fahrzeugräder (17) vorzugsweise mit Hilfe eines geeigneten Greifinstrumentes über die Abrollelemente (15) der Regale (3-5) nach vorn in das vordere Regal (2) rollbar und aus diesem entnehmbar sind.

2. Blockregal nach Anspruch 1, **dadurch gekennzeichnet, dass** die Abrollelemente (15) als waagerecht verlaufende Laufflächen ausgebildet sind.

3. Blockregal nach Anspruch 1, **dadurch gekennzeichnet, dass** die Abrollelemente (15) im Querschnitt eben, schalenförmig oder V-förmig ausgebildet sind und aus Blechen, Profilen, Gitterböden oder aus einer Mehrzahl von Rollen bestehen.

4. Blockregal nach Anspruch 1, **dadurch gekennzeichnet, dass** die vertikalen Längspfosten (6 bzw. 10) der Regale (2-5) eine Vielzahl von Schlitzen (18) und/oder Ausnehmungen (21) aufweisen, in welche die Traversen (9 bzw. 11) jedes Regals (2-5) und die die Regale (2-5) verbindenden weiteren Traversen (11) einsetzbar sind.

5. Blockregal nach Anspruch 1, **dadurch gekennzeichnet, dass** die Querstreben (8) rasterartig gelocht sind und zur Aufnahme der Räderhalter (16) dienen.

6. Blockregal nach Anspruch 1, **dadurch gekennzeichnet; dass** die Räderhalter (16) als Seile, Spanndrähte, Längsstäbe, Laschen, Platten, Scheiben, Schienen oder dergleichen ausgebildet und in die gelochten Querstreben (8) der Regale (2-5) eingebracht sind.

7. Blockregal nach Anspruch 1, **dadurch gekennzeichnet, dass** das Greifinstrument ein rechenartiges Werkzeug, Zugband oder dergleichen ist.

8. Blockregal nach Anspruch 1, **dadurch gekennzeichnet, dass** die Größe der Fächer der Regale (2-5) in Abhängigkeit von den Abmessungen der Fahrzeugräder (17) dimensioniert ist.

## Claims

1. A block shelf (1) for storing vehicle wheel sets (17), which are stored vertically and opposite to the respective running surfaces behind one another in the block shelf (1), with a plurality of shelves (2-5) spaced from one another on their longitudinal sides with respectively a large number of vertical longitudinal posts (6), which are connected on the front sides of the shelf through several struts (9) and on the longitudinal sides of the shelf through cross braces (8) and hence form compartments, whereas the shelves (2-5), which are spaced from one another, are connected by means of additional struts (11) and whereas rolling elements (15) are provided for the vehicle wheels (17) in the compartments of the shelves (2-5), **characterised in that** the rolling elements (15) are designed as running surfaces possibly rising at an angle from the front shelf (2) to the rear shelf (5), and that depending on the respective width of the vehicle wheels (17) a large number of lateral wheel supports (16) are arranged on the cross braces (8) of the shelves as fall protection, which respectively delineate a set of consecutive vertically arranged vehicle wheels (17) and protect against fall hazards, whereas the wheel supports (16) are inserted occasionally or systematically as well as vertically or horizontally into the drilled cross braces (8) or other side guides of the shelves (2-5), and that the vehicle wheels (17) can roll over the rolling elements (15) of the shelves (3-5) forwards into the front shelf (2) and can be removed therefrom preferably using an appropriate gripping instrument.

2. Block shelf according to claim 1, **characterised in that** the rolling elements (15) are designed as horizontal running surfaces.

3. Block shelf according to claim 1, **characterised in that** the rolling elements (15) are designed flat, cup-shaped or V-shaped in their cross-section and consist of sheet metals, profiles, grid trays or of a large number of rolls.

4. Block shelf according to claim 1, **characterised in that** the vertical longitudinal posts (6 or 10) of the shelves (2-5) have a large number of slots (18) and/or recesses (21), into which the struts (9 or 11) of each shelf (2-5) and the additional struts (11) connecting the shelves (2-5) can be inserted.

5. Block shelf according to claim 1, **characterised in that** the cross braces (8) are drilled in a locking manner and are used for accommodating the wheel supports (16).

6. Block shelf according to claim 1, **characterised in that** the wheel supports (16) are designed as ropes, tension wires, longitudinal bars, straps, plates, discs, rails or similar and are inserted into the drilled cross braces (8) of the shelves (2-5).

7. Block shelf according to claim 1, **characterised in that** the gripping instrument is a rake-like tool, a tie rod or similar.

8. Block shelf according to claim 1, **characterised in that** the size of the compartments of the shelves (2-5) is determined depending on the dimensions of the vehicle wheels (17).

## Revendications

1. Etagère en bloc (1) destinée au stockage de jeux de roues de véhicules (17) qui sont stockées débout et les unes derrière les autres respectivement en se faisant face sur les surfaces de roulement, dans ladite étagère en bloc (1), comprenant plusieurs étagères (2-5) qui sont espacées les unes par rapport aux autres sur leurs grands côtés et présentent chacune une pluralité de montants longitudinaux verticaux (6) qui sont reliés par plusieurs traverses (9) sur les faces frontales d'étagère et par des entretoises (8) sur les grands côtés d'étagère et forment ainsi des compartiments, les étagères (2-5) espacées les unes par rapport aux autres étant reliées par d'autres traverses (11) et dans lesdits compartiments des étagères (2-5) étant disposés des éléments de déroulement (15) pour les roues de véhicule (17), **caractérisée par le fait que** lesdits éléments de déroulement (15) sont réalisés en tant que surfaces de roulement qui s'étendent, le cas échéant en montant, depuis l'étagère avant (2) vers l'étagère arrière (5), et que plusieurs supports de roue latéraux (16) faisant fonction d'anti-tombée sont disposés, en fonction de la largeur respective des roues de véhicule (17), sur lesdites entretoises (8) des étagères et limitent chacun un jeu de roues de véhicule (17) placées les unes derrière les autres et rangées debout et protègent celui-ci contre le fait de tomber, lesdits supports de roue (16) sont insérés isolément ou de façon continue ainsi que verticalement ou horizontalement dans les entretoises (8) trouées ou dans d'autres guides latérales des étagères (2-5), et que les roues de véhicule (17) sont aptes à être roulées de préférence à l'aide d'un instrument de préhension approprié, via lesdits éléments de déroulement (15) des étagères (3-5), vers l'avant dans l'étagère avant (2) et être sorties de cette dernière.

2. Etagère en bloc selon la revendication 1, **caractérisée par le fait que** lesdits éléments de déroulement (15) sont réalisés sous forme de surfaces de roulement s'étendant horizontalement.

3. Etagère en bloc selon la revendication 1, **caractérisée par le fait que**, en coupe transversale, lesdits éléments de déroulement (15) sont réalisés plans, en cuvette ou en V et sont constitués par des tôles, profilés, fonds grillagés ou par une pluralité de rouleaux.

4. Etagère en bloc selon la revendication 1, **caractérisée par le fait que** les montants longitudinaux verticaux (6 respectivement 10) des étagères (2-5) présentent une pluralité de fentes (18) et/ou d'évidements (21) dans lesquels lesdites traverses (9 respectivement 11) de chaque étagère (2-5) ainsi que les autres traverses (11) reliant les étagères (2-5) sont aptes à être insérées.

5. Etagère en bloc selon la revendication 1, **caractérisée par le fait que** lesdites entretoises (8) sont trouées à la manière d'une trame et servent à recevoir lesdits supports de roue (16).

6. Etagère en bloc selon la revendication 1, **caractérisée par le fait que** lesdits supports de roue (16) sont réalisés en tant que câbles, fils tendeurs, barres longitudinales, languettes, plaques, disques, rails ou similaire et sont mis en place dans les entretoises (8) trouées des étagères (2-5).

7. Etagère en bloc selon la revendication 1, **caractérisée par le fait que** ledit instrument de préhension est un outil de type râteau, un tirant ou similaire

8. Etagère en bloc selon la revendication 1, **caractérisée par le fait que** la taille des compartiments des étagères (2-5) est dimensionnée en fonction des dimensions des roues de véhicule (17).
